# EUROPEAN PATENT APPLICATION

(11) **EP 4 575 489 A1**
(43) Date of publication of application: **25.06.2025**
(21) Application number: 23852201.5
(22) Date of filing: 22.05.2023
(51) Int. Cl.: G01N 31/12, G01N 1/22, G01N 30/02

(54) **COMBUSTION GAS ABSORPTION SOLUTION PRODUCTION APPARATUS, AND COMBUSTION ION CHROMATOGRAPH**

(30) Priority: 10.08.2022 JP 2022128509
(71) Applicant: SHIMADZU CORPORATION, Kyoto-shi, Kyoto 604-8511 (JP)
(72) Inventor: IKEZAWA, Yoshio, Kyoto-shi, Kyoto 604-8511 (JP)
(74) Representative: Müller-Boré & Partner Patentanwälte PartG mbB
(86) International application number: PCT/JP2023/018977
(87) International publication number: WO 2024/034216

(57) **Abstract**

A combustion gas absorption liquid generation device includes a supplier, a combuster that generates a combustion gas by combusting and decomposing a sample, and an absorber that causes an absorption liquid to absorb the combustion gas generated in the combuster. The supplier supplies the sample supplied from a sample supplier to the combuster, and supplies the absorption liquid supplied from an absorption liquid supplier to the absorber.

## Description

### [Technical Field]

The present invention relates to a combustion gas absorption liquid generation device and a combustion ion chromatograph including the combustion gas absorption liquid generation device.

### [Background Art]

There is a combustion ion chromatograph including a combuster, an absorber and a detector. A combustion gas is generated from a sample combusted in the combuster. In the absorber, the combustion gas generated in the combuster is trapped in an absorption liquid. The absorption liquid in which the combustion gas is trapped is introduced into the ion chromatograph which is a detector, and a subject substance included in the sample is detected. In Non-Patent Document 1, described below, a method of measuring total organic fluorine using combustion ion chromatography is studied. Further, in Non-Patent Document 2, a method of measuring PFAS (polyfluoroalkyl substance) using a combustion tube has been studied.
[Non-Patent Document 1] "Contamination distribution study about unknown organic fluorine compounds using a total organic halogen analysis method," by Yuji Suzuki, Graduate School of Global Environmental Studies, Kyoto University, Lake Biwa-Yodo River Water Quality Preservation Organization, Research and Study Results Report Meeting for 2016, held in 2017.
[Non-Patent Document 2] "Quantification of per-and polyfluoroalkyl substances with a modified total organic carbon analyzer and ion chromatography," AWWA Water Science, March 31, 2021.

### [Summary of Invention]

### [Technical Problem]

Since the combustion ion chromatograph includes the combuster and the absorber, the structure for supplying a sample, an absorption liquid, a cleaning liquid and the like to each of the components is required, and it requires many components. Therefore, it is desired to make the entire device compact by reducing the number of components included in the device.

An object of the present invention is to reduce the number of components for a configuration for supplying a sample or the like to a combuster and an absorber and to make a device compact.

### [Solution to Problem]

A combustion gas absorption liquid generation device according to one aspect includes a supplier, a combuster that generates a combustion gas by combusting and decomposing a sample, and an absorber that causes an absorption liquid to absorb the combustion gas generated in the combuster. The supplier supplies the sample supplied from a sample supplier to the combuster, and supplies the absorption liquid supplied from an absorption liquid supplier to the absorber.

The present invention is also directed to a combustion ion chromatograph.

### [Advantageous Effects of Invention]

With the present invention, it is possible to reduce the number of components for the configuration for supplying a sample or the like to a combuster and an absorber and to make a device compact.

### [Brief Description of the Drawings]

[FIG. 1] Fig. 1 is an overview showing a combustion ion chromatograph according to the present embodiment.
[FIG. 2] Fig. 2 is a diagram showing the configuration of a valve included in a supplier.
[FIG. 3] Fig. 3 is a diagram showing an absorber according to a modified example.
[FIG. 4] Fig. 4 is a diagram showing an absorber according to another modified example.
[FIG. 5] Fig. 5 is a diagram showing a combuster according to the modified example.

### [Description of Embodiments]

A combustion gas absorption liquid generation device and a combustion ion chromatograph according to embodiments of the present invention will now be described with reference to the attached drawings.

### (1) Overall Configuration of Combustion Ion Chromatograph

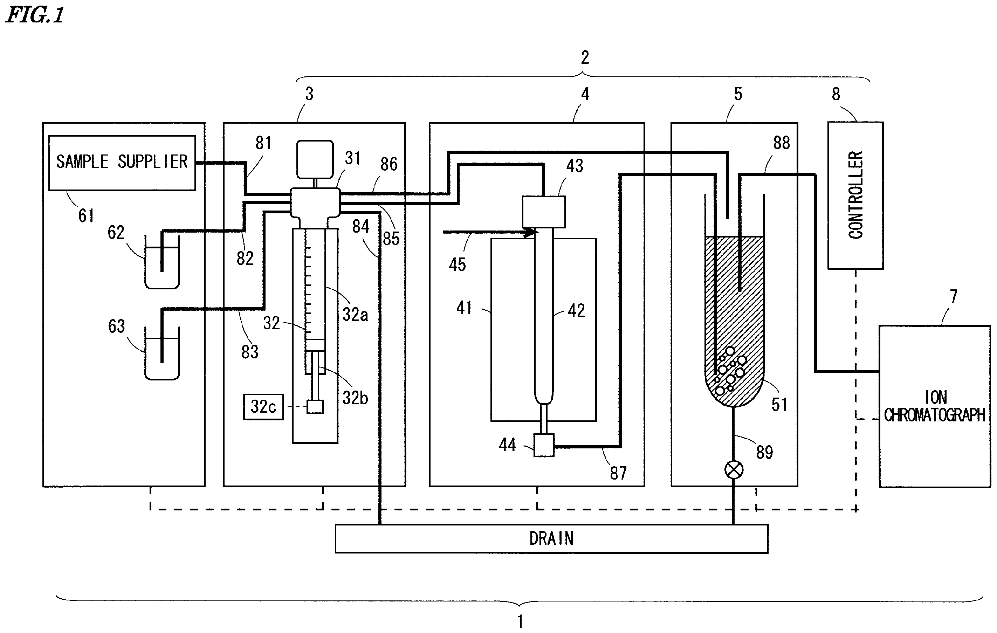

Fig. 1 is an overview showing a combustion ion chromatograph 1 according to the present embodiment. The combustion ion chromatograph 1 includes a supplier 3, a combuster 4, an absorber 5, an ion chromatograph 7 and a controller 8. Further, the combustion ion chromatograph 1 includes a sample supplier 61, an absorption liquid tank 62 and a pure water tank 63. The supplier 3, the combuster 4, the absorber 5 and the controller 8 constitute a combustion gas absorption liquid generation device according to the present embodiment.

The supplier 3 includes a valve 31 and a syringe pump 32. The valve 31 is a multi-port valve. As the valve 31, a multi-port valve having eight ports is used, for example. The syringe pump 32 includes a cylindrical syringe 32a, a piston 32b inserted into the syringe 32a, and a driver 32c that moves the piston 32b in an upward-and-downward direction. As the driver 32c, a pulse motor is used, for example.

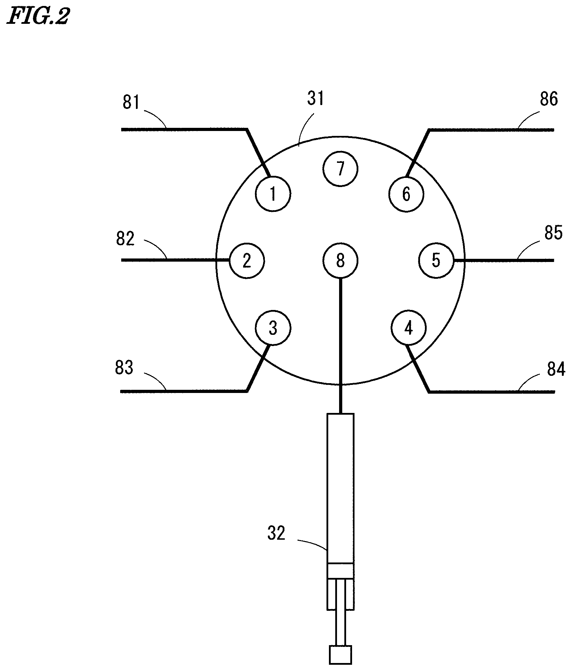

Fig. 2 is a diagram showing the configuration of the valve 31. A flow path 81 is connected to a first port of the valve 31. A sample is supplied to the supplier 3 by the sample supplier 61 through the flow path 81. The sample supplier 61 is a sample bottle in which a sample is stored, for example. Alternatively, the sample supplier 61 may include an autosampler.

A flow path 82 is connected to a second port. An absorption liquid stored in the absorption liquid tank 62 is supplied to the supplier 3 through the flow path 82. A flow path 83 is connected to a third port. Pure water stored in the pure water tank 63 is supplied to the supplier 3 through the flow path 83. A flow path 84 is connected to a fourth port. The flow path 84 is connected to a drain through a valve (not shown).

A flow path 85 is connected to a fifth port. The supplier 3 supplies the sample to the combuster 4 through the flow path 85. A flow path 86 is connected to a sixth port. The supplier 3 supplies the absorption liquid to the absorber 5 through the flow path 86. Further, the syringe pump 32 is connected to an eighth port. The valve 31 can alternatively connect any one of the first to seventh ports to the syringe pump 32 connected to the eighth port. For example, a rotary valve can be used as the valve 31.

Reference is again made to Fig. 1. The combuster 4 heats the sample and generates gas by combustion of the sample. Examples of the gas generated by combustion (referred to as a combustion gas) include carbon dioxide derived from carbon and hydrogen fluoride derived from fluorine, for example. Further, the combustion gas includes water vapor. The combuster 4 includes an electric furnace (heating furnace) 41 and a combustion tube 42. The combustion tube 42 is placed in a high-temperature environment of 680 degrees, for example, by the electric furnace 41. An injector 43 is provided at the upper end of the combustion tube 42. The injector 43 is connected to the valve 31 through the flow path 85. The injector 43 holds the combustion tube 42 and is provided with an injection port for injecting the sample. The lower end of the combustion tube 42 is connected to a flow path 87 through a connector 44. A carrier gas supply path 45 is connected to the combustion tube 42, and a carrier gas is supplied to the combustion tube 42 through the carrier gas supply path 45. The combustion gas generated in the combustion tube 42 is sent to the absorber 5 through the flow path 87.

The absorber 5 includes an absorption liquid tube 51 that stores the absorption liquid. Outlet ports of the flow path 86 and the flow path 87 are arranged in the absorption liquid tube 51. The absorption liquid supplied from the supplier 3 is supplied to the absorption liquid tube 51 through the flow path 86. Examples of the absorption liquid include ultrapure water, an aqueous solution including KH₂PO₄ or H₂O₂, or the like. The combustion gas generated in the combustion tube 42 is supplied to the absorption liquid tube 51 through the flow path 87. The outlet port of the flow path 87 is arranged near the lower end of the absorption liquid tube 51, so that the combustion gas sent from the flow path 87 is easily trapped in the absorption liquid filling the absorption liquid tube 51.

Further, an inlet port of the flow path 88 is arranged in the absorption liquid tube 51. A flow path 88 is connected to the ion chromatograph 7. The absorption liquid sucked from the absorption liquid tube 51 is sent to the ion chromatograph 7. Further, a flow path 89 is connected to the lower end of the absorption liquid tube 51. The flow path 89 is connected to the drain through a valve. At the time of liquid discharge, the valve is opened, and the absorption liquid in the absorption liquid tube 51 is discharged to the drain.

The ion chromatograph 7 includes a separation column and a detector. The absorption liquid generated in the combustion gas absorption liquid generation device 2 is introduced into the ion chromatograph 7. The ion chromatograph 7 detects, in the detector, ions separated in the separation column. For example, in the detector, fluoride ions F⁻, chloride ions Cl⁻ and the like are detected. The controller 8 controls the supplier 3, the combuster 4, the absorber 5 and the ion chromatograph 7. The controller 8 also controls an operation of the sample supplier 61.

### (2) Operation of Combustion Ion Chromatograph

Next, an operation of the combustion ion chromatograph 1 will be described. First, an operation of supplying the absorption liquid to the absorption liquid tube 51 will be described. The valve 31 of the supplier 3 is switched such that the second port and the eighth port are connected to each other. The driver 32c is driven in this state, so that the syringe pump 32 performs a sucking operation, and the absorption liquid in the absorption liquid tank 62 is sucked into the syringe 32a. Next, the valve 31 is switched such that the sixth port and the eighth port are connected to each other. The driver 32c is driven in this state, so that the syringe pump 32 performs a discharging operation, and the absorption liquid in the syringe 32a is supplied to the absorption liquid tube 51.

Next, with the absorption liquid tube 51 filled with the absorption liquid, a sample is supplied. First, the valve 31 of the supplier 3 is switched such that the first port and the eighth port are connected to each other. The driver 32c is driven in this state, so that the syringe pump 32 performs a sucking operation, and the sample in the sample supplier 61 is sucked into the syringe 32a. In the sample, a solid or liquid subject substance is dissolved in a solvent or water, for example. The subject substance is organic fluorine such as PFOA or PFOS, for example. Next, the valve 31 is switched such that the fifth port and the eighth port are connected to each other. The driver 32c is driven in this state, so that the syringe pump 32 performs the discharging operation, and the sample in the syringe 32a is supplied to the combustion tube 42.

Before the above-mentioned operation is performed, the combustion tube 42 and the absorption liquid tube 51 may be cleaned as necessary. In a cleaning step, the valve 31 of the supplier 3 is switched such that the third port and the eighth port are connected to each other. The driver 32c is driven in this state, so that the syringe pump 32 performs the sucking operation, and pure water in the pure water tank 63 is sucked into the syringe 32a. Then, in order to clean the combustion tube 42, the valve 31 is switched such that the fifth port and the eighth port are connected to each other, and the pure water in the syringe 32a is supplied to the combustion tube 42. Further, in order to clean the absorption liquid tube 51, the valve 31 is switched such that the sixth port and the eighth port are connected to each other, and the pure water in the syringe 32a is supplied to the absorption liquid tube 51.

The sample supplied to the combustion tube 42 is heated in the electric furnace 41. Thus, in the combustion tube 42, the sample is decomposed, and a combustion gas is generated. Quartz wool, a cotton-like catalyst, a granular catalyst or their compound is accommodated as a filler in the combustion tube 42, and the sample is combusted while being retained by the filler. Further, the combustion of the sample is promoted by the catalyst. The combustion gas generated in the combustion tube 42 flows downstream by a carrier gas supplied through the carrier gas supply path 45, and is supplied into the absorption liquid tube 51 through the flow path 87. A supply amount, a supply speed and the like of the carrier gas supplied through the carrier gas supply path 45 are controlled by the controller 8. As described above, because the outlet port of the flow path 87 is arranged near the lower end of the absorption liquid tube 51, the combustion gas supplied through the flow path 87 is discharged into the absorption liquid from the vicinity of the lower end of the absorption liquid tube 51. Thus, the combustion gas is efficiently trapped in the absorption liquid. Further, the water vapor included in the combustion gas is also condensed by being cooled, and is accumulated as the absorption liquid.

After a sufficient period of time for all samples to be combusted in the combustion tube 42 and a sufficient period of time for all combustion gases generated in the combustion tube 42 to be sent to the absorption liquid tube 51 have elapsed, an analysis process for the absorption liquid is started in the ion chromatograph 7. A substance to be analyzed is present as ions in the absorption liquid introduced into the ion chromatograph 7. In the ion chromatograph 7, the ions in the absorption liquid are separated by the separation column. Then, the ions separated in the separation column are detected by the detector.

As described above, in the combustion ion chromatograph 1 of the present embodiment, the supplier 3 performs both of the operations of supplying the sample to the combuster 4 and supplying the absorption liquid to the absorber 5. Thus, it is possible to reduce the number of components of the combustion ion chromatograph 1 and the combustion gas absorption liquid generation device 2 and make the device compact. For example, because it is not necessary to individually provide the syringe pump 32 or the driver 32c included in the supplier 3, it is possible to reduce the number of components and reduce the cost. Further, because the number of the drivers 32c is reduced, the maintainability is enhanced, and risk of failure is reduced. Further, because the number of the drivers 32c is reduced, the necessity of controlling the control timing according to the state of each driver is reduced, and a time program is easily studied in developing a control program. Further, in the combustion ion chromatograph 1 of the present embodiment, the supplier 3 performs an operation of supplying a cleaning liquid to the combuster 4 and the absorber 5. Thus, it is possible to reduce the number of components of the combustion ion chromatograph 1 and the combustion gas absorption liquid generation device 2, and make the device compact.

### (3) Modified Examples

Next, the modified examples 1 to 4 of the combustion gas absorption liquid generation device and the combustion ion chromatograph according to the present embodiment will be described.

### (3-1) Modified Example 1

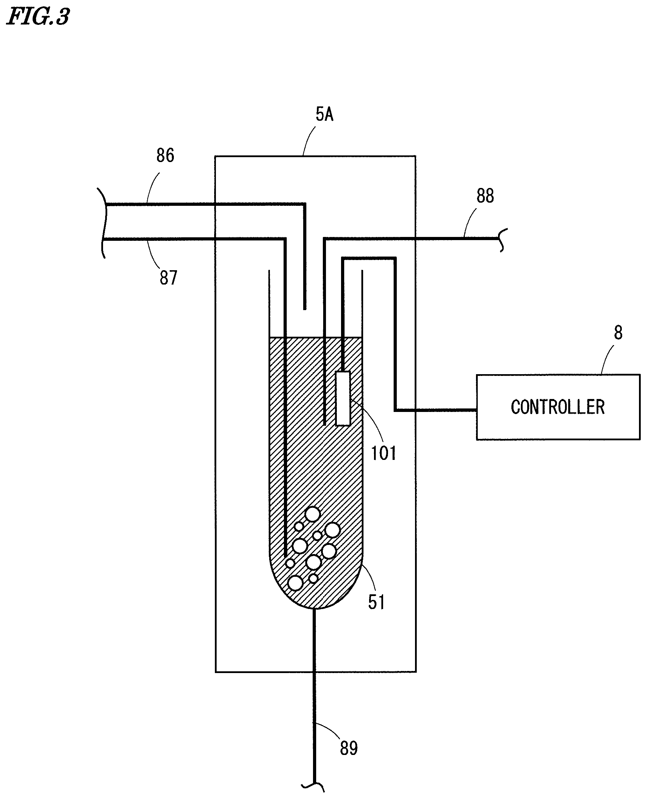

Fig. 3 is a diagram showing an absorber 5A according to a first modified example. The absorber 5A includes a conductivity meter 101. The conductivity meter 101 is arranged in an absorption liquid tube 51 so as to be able to measure the conductivity of an absorption liquid. The conductivity measured by the conductivity meter 101 is output to a controller 8. The controller 8 can acquire an amount of ions in the absorption liquid based on the conductivity of the absorption liquid. Thus, the controller 8 can estimate an amount of combustion gas to be trapped in the absorption liquid based on the amount of ions.

When an analysis using combustion ion chromatography is started, the controller 8 monitors the conductivity of the absorption liquid and calculates its change rate. When a predetermined amount of sample is supplied to a combuster 4, generation of a combustion gas starts. Then, when the combustion gas starts to be trapped in the absorption liquid, the conductivity of the absorption liquid starts to increase. In a period during which the combustion gas continues to be supplied to the absorption liquid, the conductivity of the absorption liquid continues to fluctuate. However, as the combustion of a sample (decomposition of the sample) progresses in a combustion tube 42, an amount of the sample remaining in the combustion tube 42 gradually decreases. Thus, an amount of the combustion gas to be supplied to the absorption liquid also gradually decreases. The controller 8 continues to monitor the conductivity of the absorption liquid and calculate the conductivity, and compares the change rate of the conductivity with a predetermined threshold value. Then, at a point in time at which the change rate of the conductivity falls below the predetermined threshold value, the controller 8 determines that the combustion of the sample in the combustion tube 42 is completed and the absorption of the combustion gas into the absorption liquid is completed.

When determining the absorption of the combustion gas into the absorption liquid is completed, the controller 8 provides an instruction for starting an analysis process to an ion chromatograph 7. In response to this instruction, the ion chromatograph 7 starts the sample analysis process. According to the modified example 1, a point in time at which the absorption of the combustion gas into the absorption liquid is completed can be acquired. That is, the controller 8 can determine the end of the process in the combuster 4 and the absorber 5. The period of time until the absorption of the combustion gas into the absorption liquid is completed varies depending on the type of a subject substance included in a sample, the processing conditions in the combuster 4, the device configuration and the like. Conventionally, a fixed and longer period of time is set to ensure a sufficient period of time in order for absorption of the combustion gas into the absorption liquid to be reliably completed. Therefore, even in a case in which the processing period of time is short, a long processing period of time is uniformly required. According to the modified example 1, it is possible to eliminate a wasteful waiting period of time and improve the efficiency of the process. According to the modified example 1, the process in the absorber 5 can automatically end. Further, in a case in which the concentration of a subject substance included in a sample is low or a case in which a sample is easily decomposed by combustion, the absorption process ends in a short period of time. Thus, the throughput is improved.

### (3-2) Modified Example 2

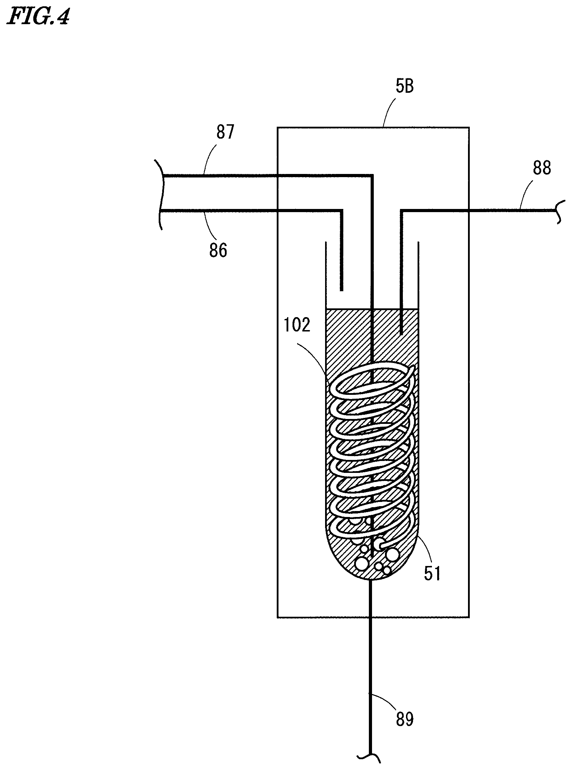

Fig. 4 is a diagram showing an absorber 5B according to a modified example 2. The absorber 5B includes a spiral member 102. The spiral member 102 is arranged in an absorption liquid tube 51 such that the center axis of the spiral member 102 is aligned with the center axis of the absorption liquid tube 51. Thus, when an absorption liquid is supplied to the absorption liquid tube 51, the spiral member 102 is also arranged in the absorption liquid.

In the modified example 2, a flow path 87 is inserted into a space extending in an upward-and-downward direction in the spiral member 102. An outlet port of the flow path 87 is arranged below the lower end of the spiral member 102. With such a structure, a combustion gas discharged from the outlet port of the flow path 87 rises along the upper end portion of the spiral member 102 from the lower end portion of the spiral member 102. At this time, a combustion gas does not rise straight but rises spirally due to the shape of the spiral member 102. Thus, it is possible to efficiently trap the combustion gas in an absorption liquid. The contact period of time and the contact distance between the combustion gas and the absorption liquid can be increased as compared to a case in which the combustion gas rises straight. Thus, the collection rate of the combustion gas in the absorption liquid can be increased.

In a combustion ion chromatograph 1, in order to obtain a proper analysis result, it is desirable that a sample supplied by the supplier 3 is all reliably absorbed in an absorption liquid. Conventionally, in order to sufficiently absorb a combustion gas in the absorption liquid, the absorption liquid tube 51 is filled with a sufficient amount of an absorption liquid. However, when an amount of the absorption liquid increases, the concentration of a subject substance decreases accordingly. As a result, analytical sensitivity is degraded. Because the absorber 5B according to the modified example 2 includes the spiral member 102, it is possible to sufficiently trap a combustion gas in an absorption liquid while suppressing an increase in amount of the absorption liquid. Further, because the lower end portion of the spiral member 102 is arranged to be inclined with respect to a horizontal direction, the discharged absorption liquid can raise in a spiral shape without being stagnated.

In a case in which a combustion ion chromatograph 1 according to the modified example 2 is used for a halogen analysis, it is desirable that a material not including halogen is used for the spiral member 102. For example, it is possible to prevent unnecessary information from being included in a measurement result by utilizing a maternal such as glass or polyether ether ketone (PEEK) for the spiral member 102. For example, it is possible to prevent contamination caused by fluoride ions or the like that may be generated from the spiral member 102 itself. The spiral member 102 may be fabricated by processing of a wire-like member into a spiral shape. Alternatively, the spiral member 102 may be fabricated by winding of an elongated plate-like member into a reel shape and stretching of the member in an axial direction.

### (3-3) Modified Example 3

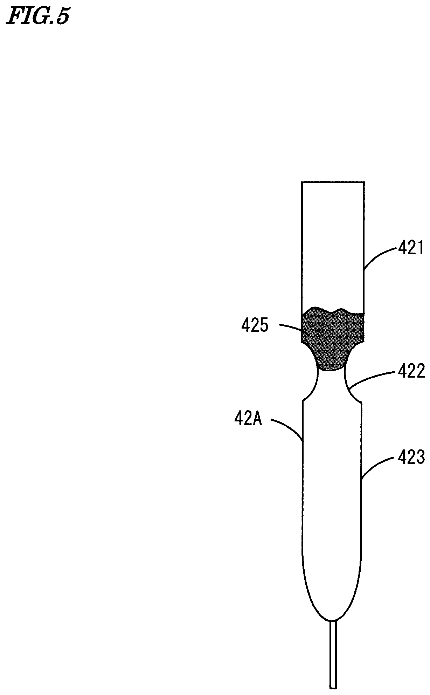

Fig. 5 is a diagram showing a combustion tube 42A according to a modified example 3. A reduced portion 422 is formed in the middle portion in an upward-and-downward direction of the combustion tube 42A. The reduced portion 422 has a cross-sectional area in the horizontal direction (in a case in which a longitudinal direction of the combustion tube 42A is defined as the upward-and-downward direction) smaller than the cross-sectional area of each of the upper portion 421 and the lower portion 423 of the reduced portion 422. That is, in the combustion tube 42A, the cross-sectional area of the middle portion in the longitudinal direction is smaller than the cross-sectional area of a portion other than the middle portion.

Then, as shown in Fig. 5, a fiber member 425 such as quartz wool or a cotton-like catalyst is packed into the reduced portion 422 in the combustion tube 42A. With such a configuration, it is possible to prevent the fiber member 425 from moving to the lower end of the combustion tube 42A due to the introduction of a sample.

In a combustion ion chromatograph 1, the analysis sensitivity depends on an amount of a sample to be supplied to a combuster 4. In a case in which a subject substance has a low concentration, it is necessary to supply a sample of about 1000 µL to the combuster 4, for example. In a case in which an amount of sample is large as described above, the fiber member 425 which is the filler in the combustion tube 42A is gradually pushed downwardly of the combustion tube 42A. According to the modified example 3, because the reduced portion 422 is formed, it is possible to suppress the movement of the fiber member 425.

Although the combustion tube 42 is placed in a high-temperature environment due to heating by an electric furnace 41, because the upper and lower end portions of the combustion tube 42 are connected to the flow path and opened, the temperatures of the upper and lower portions of the combustion tube 42 are lower than that of the center portion of the combustion tube 42. That is, a temperature gradient in the upward-and-downward direction (longitudinal direction) is generated in the combustion tube 42. In the modified example 3, because the reduced portion 422 is provided in the middle portion in the upward-and-downward direction (the center portion in the upward-and-downward direction, for example), the fiber member 425 can be retained in the middle portion in the upward-and-downward direction, and a sample can be processed in a high-temperature area. Thus, the combustion process by the combuster 4 can efficiently progress.

### (3-4) Modified Example 4

In a case in which an organic fluorine compound is analyzed in combustion ion chromatography, a substance to be analyzed may remain in a flow path due to its flame retardancy or persistent property. Therefore, in order to increase the collection rate of a substance to be analyzed in an absorber 5, pure water is injected into a combuster 4 after the combustion process, separately from a sample. Then, an operation of also taking the pure water, that has been injected to wash away a residual substance, into an absorption liquid is performed. Although this operation is similar to a cleaning operation, the injected pure water itself is also collected as the absorption liquid.

A supplier 3 in the modified example 4 is different from a supplier in the conventional combustion ion chromatography in that the supplier 3 supplies a sample to the combuster 4 at the rate of 30 to 50 seconds/1 mL. In the conventional combustion ion chromatography, a sample is supplied to a combuster in a short period of time of less than one second. In the modified example 4, since a sample is supplied at a very low rate of 30 to 50 seconds/1 mL, an increase in air pressure in a flow path 85 and the combuster 4 can be suppressed. Thus, no load is applied to the constituent elements in the flow path 85 and the combuster 4, so that it is possible to supply a large amount of sample in one step. For example, conventionally, although a sample of about 0.1 mL can be supplied per operation, it is possible to supply a sample of about 0.5 mL per operation with the method of the modified example 4. Further, conventionally, although a remaining substance to be analyzed is washed away by supply of pure water of about 0.1 mL per operation, pure water of about 1.5 mL can be supplied per operation with the method of the modified example 4.

For example, conventionally, a sample of 0.1 mL is supplied ten times per operation, and then pure water of 0.1 mL is supplied thirty times per operation. Therefore, a sample of 1 mL is supplied to a combuster, and all of the samples are collected by the pure water in an absorber. In contrast, according to the modified example 4, a sample of 0.5 mL is supplied twice per operation, and then pure water of 1.5 mL is supplied twice per operation. Thus, a sample of a similar amount can be collected by the absorber 5.

In order to supply a sample of 0.5 mL to the combuster 4, it takes about 15 seconds to 25 seconds at the rate of 30 to 50 seconds/1mL. Therefore, a period of time required for supplying a sample and pure water each time increases by about 15 seconds to 25 seconds with the method of the modified example 4. In contrast, in order to supply a sample and pure water multiple times, a period of time of 3 to 5 minutes is required each time, with the period of time including a recovery period of time required for a temperature drop of an electric furnace, etc. Therefore, although a supply period of time required for each time increases, the number of times a sample and pure water are supplied decreases to about 1/10. Therefore, it is possible to greatly shorten a processing period of time.

Thus, according to the modified example 4, the supplier 3 supplies a sample to the combuster 4 at the rate of 30 to 50 seconds/1 mL. Therefore, it is possible to increase an amount of a sample or pure water to be supplied in one operation without applying a load to the constituent elements of the device. Further, the supplier 3 supplies a sample to the combuster 4 once to five times (twice in the above-mentioned example), and then supplies a cleaning liquid to the combuster 4 once to five times (twice in the above-mentioned example). Therefore, it is possible to significantly shorten a processing period of time.

### (4) Other Modified Examples

The combustion gas absorption liquid generation device 2 of the above-mentioned embodiment includes the configuration for supplying pure water for cleaning separately from the absorption liquid. Depending on the properties of a subject substance, pure water can be used as the absorption liquid. In this case, the configuration for supplying the absorption liquid can be used as the configuration for supplying the pure water.

### (5) Correspondences Between Constituent Elements in Claims and Parts in Preferred Embodiments

In the following paragraphs, non-limiting examples of correspondences between various elements recited in the claims below and those described above with respect to various preferred embodiments of the present invention are explained. In the above-mentioned embodiment, the absorption liquid tank 62 is an example of an absorption liquid supplier, and the pure water tank 63 is an example of a cleaning liquid supplier. Further, in the above-mentioned embodiment, the flow path 87 is an example of a combustion gas flow path.

As each of various elements recited in the claims, various other elements having configurations or functions described in the claims can be also used.

### (6) Aspects

It will be appreciated by those skilled in the art that the exemplary embodiments described above are illustrative of the following aspects.

(Item1) A combustion gas absorption liquid generation device according to one aspect includes a supplier, a combuster that generates a combustion gas by combusting and decomposing a sample, and an absorber that causes an absorption liquid to absorb the combustion gas generated in the combuster, wherein the supplier supplies the sample supplied from a sample supplier to the combuster, and supplies the absorption liquid supplied from an absorption liquid supplier to the absorber.

The number of components for the configuration for supplying a sample or the like to the combuster and the absorber can be reduced, and the device can be made compact.

(Item 2) The combustion gas absorption liquid generation device according to item 1, wherein the supplier may include a syringe pump, and a multi-port valve that is connected to the sample supplier, the absorption liquid supplier and the syringe pump, and the multi-port valve may be switched to connect between the sample supplier and the syringe pump when the sample is supplied from the sample supplier, and may be switched to connect between the absorption liquid supplier and the syringe pump when the absorption liquid is supplied from the absorption liquid supplier.

The syringe pump and the its driver can be used for supplying the sample and for supplying the absorption liquid.

(Item 3) The combustion gas absorption liquid generation device according to item 2, wherein the multi-port valve may be further connected to the combuster and the absorber, may be switched to connect between the syringe pump and the combuster when the sample is supplied to the combuster, and may be switched to connect between the syringe pump and the absorber when the absorption liquid is supplied to the absorber.

The syringe pump and its driver can be used for supplying the sample and for supplying the absorption liquid.

(Item 4) The combustion gas absorption liquid generation device according to item 2, wherein the multi-port valve may be further connected to a cleaning liquid supplier, and may be switchable to connect between the cleaning liquid supplier and the syringe pump.

The syringe pump and the its driver for supplying the sample and for supplying the absorption liquid can be further used as a component for supplying the cleaning liquid.

(Item 5) The combustion gas absorption liquid generation device according to item 1, may further include a conductivity meter that measures a conductivity of the absorption liquid in the absorber, and a controller that determines completion of processes in the combuster and the absorber based on the conductivity measured by the conductivity meter.

It is possible to identify the progress of the process in the combuster and the absorber by measuring an amount of ions in the absorption liquid.

(Item 6) The combustion gas absorption liquid generation device according to item 5, wherein the controller may determine that the processes in the combuster and the absorber are completed when a change rate of the conductivity falls below a predetermined threshold value.

It is possible to identify the progress of the process in the combuster and the absorber based on the change rate of an amount of ions.

(Item 7) The combustion gas absorption liquid generation device according to item 1, wherein the absorber may include a spiral member that extends in an upward-and-downward direction in an absorption liquid tube storing the absorption liquid, and a combustion gas flow path that supplies, below the spiral member, the combustion gas generated in the combuster into the absorption liquid tube.

The combustion gas can be efficiently trapped in the absorption liquid.

(Item 8) The combustion gas absorption liquid generation device according to item 1, wherein the combuster may include a combustion tube which is arranged in an electric furnace and to which the sample is supplied, and the combustion tube may have a middle portion in a longitudinal direction that has a cross sectional area smaller than a cross sectional area of a portion other than the middle portion.

In a case in which quartz wool, a catalyst or the like is packed, movement of these members can be suppressed.

(Item 9) The combustion gas absorption liquid generation device according to item 8, wherein quartz wool, a catalyst or a compound of quartz wool and a catalyst may be packed into the middle portion.

The sample in the middle portion of the combustion tube can be efficiently combusted.

(Item 10) The combustion gas absorption liquid generation device according to item 1, wherein the supplier may supply the sample to the combuster at a rate of 30 to 50 seconds/1 mL.

It is possible to suppress application of a load to a member such as the combuster.

(Item 11) The combustion gas absorption liquid generation device according to item 10, wherein the supplier may supply the sample one to five times to the combuster, and then supply a cleaning liquid to the combuster one to five times.

It is possible to reduce the number of times the sample is supplied to the combuster.

(Item 12) A combustion ion chromatograph according to another aspect includes the combustion gas absorption liquid generation device according to any one of items 1 to 11.

## Claims

1. A combustion gas absorption liquid generation device comprising:
a supplier;
a combuster that generates a combustion gas by combusting and decomposing a sample; and
an absorber that causes an absorption liquid to absorb the combustion gas generated in the combuster, wherein
the supplier supplies the sample supplied from a sample supplier to the combuster, and supplies the absorption liquid supplied from an absorption liquid supplier to the absorber.

2. The combustion gas absorption liquid generation device according to claim 1, wherein
the supplier includes
a syringe pump, and
a multi-port valve that is connected to the sample supplier, the absorption liquid supplier and the syringe pump, and
the multi-port valve is switched to connect between the sample supplier and the syringe pump when the sample is supplied from the sample supplier, and is switched to connect between the absorption liquid supplier and the syringe pump when the absorption liquid is supplied from the absorption liquid supplier.

3. The combustion gas absorption liquid generation device according to claim 2, wherein
the multi-port valve is further connected to the combuster and the absorber, is switched to connect between the syringe pump and the combuster when the sample is supplied to the combuster, and is switched to connect between the syringe pump and the absorber when the absorption liquid is supplied to the absorber.

4. The combustion gas absorption liquid generation device according to claim 2, wherein
the multi-port valve is further connected to a cleaning liquid supplier, and is switchable to connect between the cleaning liquid supplier and the syringe pump.

5. The combustion gas absorption liquid generation device according to claim 1, further comprising:
a conductivity meter that measures a conductivity of the absorption liquid in the absorber; and
a controller that determines completion of processes in the combuster and the absorber based on the conductivity measured by the conductivity meter.

6. The combustion gas absorption liquid generation device according to claim 5, wherein
the controller determines that the processes in the combuster and the absorber are completed when a change rate of the conductivity falls below a predetermined threshold value.

7. The combustion gas absorption liquid generation device according to claim 1, wherein
the absorber includes
a spiral member that extends in an upward-and-downward direction in an absorption liquid tube storing the absorption liquid, and
a combustion gas flow path that supplies, below the spiral member, the combustion gas generated in the combuster into the absorption liquid tube.

8. The combustion gas absorption liquid generation device according to claim 1, wherein
the combuster includes
a combustion tube which is arranged in an electric furnace and to which the sample is supplied, and
the combustion tube has a middle portion in a longitudinal direction that has a cross sectional area smaller than a cross sectional area of a portion other than the middle portion.

9. The combustion gas absorption liquid generation device according to claim 8, wherein
quartz wool, a catalyst or a compound of quartz wool and a catalyst is packed into the middle portion.

10. The combustion gas absorption liquid generation device according to claim 1, wherein
the supplier supplies the sample to the combuster at a rate of 30 to 50 seconds/1 mL.

11. The combustion gas absorption liquid generation device according to claim 10, wherein
the supplier supplies the sample one to five times to the combuster, and then supplies a cleaning liquid to the combuster one to five times.

12. A combustion ion chromatograph including the combustion gas absorption liquid generation device according to any one of claims 1 to 11.
